# EUROPÄISCHE PATENTSCHRIFT

(11) **EP 2 090 621 B1**
(45) Veröffentlichungstag und Bekanntmachung des Hinweises auf die Patenterteilung: **23.12.2009**
(21) Anmeldenummer: 08002952.3
(22) Anmeldetag: 18.02.2008
(51) Int. Cl.: C08L 97/00

(54) **Schallabsorbierendes Schaumsystem**
Sound absorbing foam system
Système de mousse absorbant le son

(43) Veröffentlichungstag der Anmeldung: 19.08.2009
(73) Patentinhaber: Preform GmbH, 91555 Feuchtwangen (DE)
(72) Erfinder: Schönfeld, Uwe, 74575 Schrozberg (DE); Dippon, Klaus, 91459 Markt Erlbach (DE)
(74) Vertreter: Pfenning, Meinig & Partner GbR

(56) Entgegenhaltungen:
- EP-A- 1 498 464
- US-A- 3 894 878
- US-A1- 2006 280 702
- DATABASE WPI Week 198644 Derwent Publications Ltd., London, GB; AN 1986-290551 XP002479363 & SU 1 217 838 A (CONS PRODUCTS RES INST) 15. März 1986 (1986-03-15)

## Beschreibung

Die vorliegende Erfindung betrifft ein neuartiges schallabsorbierendes Schaumsystem in Form eines offenporigen mineralorganischen Materials, welches auch die Baustoffklasse B1 gemäß DIN 1402 erzielen kann und zur Reduzierung der Schallleistung insbesondere in Innenräumen eingesetzt wird. Das Material zeichnet sich dadurch aus, dass es Ligninsulfonat enthält.

Die akustischen Verhältnisse in Räumen hängen stark von den architektonischen Gegebenheiten ab. Dabei lassen sich die Größen, die den akustischen Eindruck eines Raumes bestimmen, durch entsprechende Raumgestaltung mehr oder weniger stark beeinflussen. Neben der reinen Lärmreduzierung ist die Anpassung der akustischen Eigenschaften eines Raumes an seinen Bestimmungszweck ein wesentliches Ziel der Raumakustik. Im Gegensatz zur Außenwelt sind die Schallfelder in Räumen diffus, da sie sich aus direktem und reflektiertem Schall generieren. Ihre Regelung kann durch entsprechende Reduzierung der Schalleistung erfolgen. Hierbei kommen technische Schallabsorber zum Einsatz, welche gezielte Absorptions- und Reflexionsvorgänge ermöglichen.

Grundsätzlich lassen sich technische Absorber, abhängig von ihrer Arbeitsweise in 2 Gruppen, nämlich in Resonatoren und poröse Absorber einteilen.

Bei der Wirkungsweise von Resonatoren handelt es sich ganz allgemein um akustische Feder-Masse-Systeme, welche ein ausgeprägtes Schallabsorptionsmaximum besitzen. Beispiele für solche Schallabsorber sind Platten-Resonatoren, Helmholtz-Resonatoren oder mikroperforierte Absorber.

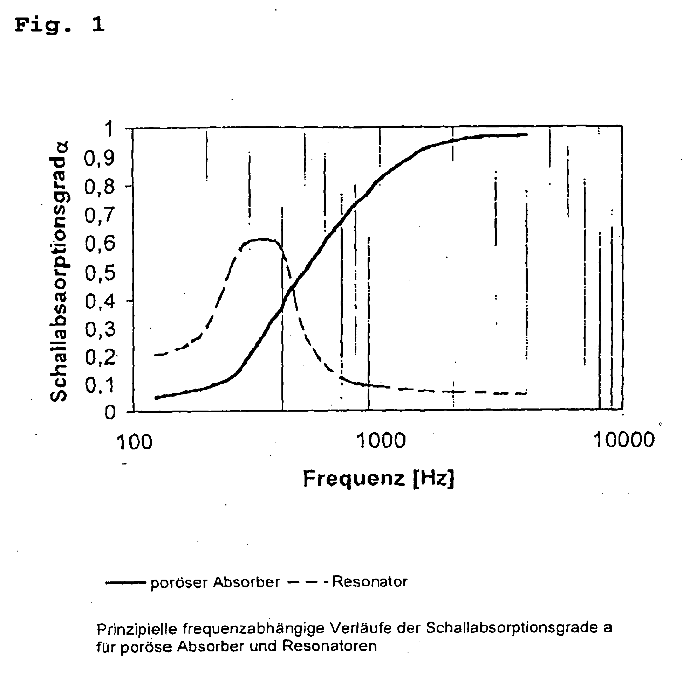

Im Gegensatz dazu erfolgt die Absorption der Schallenergie an porösen Absorbern in erster Linie durch Reibung an den Porenwänden, wo sie in Wärmeenergie ungewandelt wird. Hierfür ist eine offenporige Struktur mit ausreichender Porosität erforderlich. Aufgrund der primär durch Dissipation erzeugten Schallabsorption besitzen poröse Schallabsorber im Vergleich zu Resonatoren ein signifikant anderes Schallabsorptionsspektrum. Dabei steigt der frequenzabhängige Schallabsorptionsgrad in Idealfall stetig zu höheren Frequenzen s-förmig an und nähert sich asymptotisch einem Maximalwert. Figur 1 zeigt ein typisches Schallabsorptionsspektrum von Resonator und porösem Absorber. Poröse Absorber können unterschiedlich aufgebaut sein. Dabei sind die Materialvarianten sehr vielfältig.

Eine Verbesserung der Schallabsorptionseigenschaften poröser Absorber für den Frequenzbereich < 1 .000 Hz kann nur durch Hinzufügen weiterer schallabsorbierender Maßnahmen erfolgen. In Kombination mit Lochplatten besitzt ein solches System zusätzlich die Funktion eines Helmholtz-Resonators, so dass hier auch höhere Schallabsorptionsgrade im unteren Frequenzbereich erzielbar sind. Dies ist mit einem zusätzlichen Materialaufwand und weiteren Arbeitsgängen verbunden.

Daneben kann die Verbesserung der Schallabsorption in diesem Frequenzbereich auch durch signifikante Erhöhung der Absorbermasse erfolgen, was bei vielen Applikationen keineswegs gewünscht ist.

Nachfolgend werden die gängigsten Systeme zur Schallabsorption, ihre Materialien und die zugehörigen Charakteristiken kurz aufgeführt:

### Faserhaltige poröse Schallabsorber:

### Textilien:

Unbeschichtete offenporige Textilien können im einfachsten Fall als Vorhang eingesetzt werden. Durch gezielten Abstand zu einer schallharten Wand lassen sich insbesondere tiefere Frequenzen, bei denen poröse Absorber systembedingt ein geringes Absorptionsverhalten aufweisen, verringern,

### Vliese und Filze:

Moderne Vliese und Filze für Schallabsorptionsanwendungen besitzen heutzutage einen optimalen Strömungswiderstand und sind allgemein als Akustikvliese bzw. schallabsorbierende Faserdämmstoffe im Handel. Die entsprechenden Produkte können mit speziellen Brandschutzmitteln eine erhöhte Flammwidrigkeit aufweisen und die Baustoffklasse B1 "Baustoff mit schwerentflammbaren Eigenschaften" erreichen. Zur Herstellung von Akustikvliesen bzw. schallabsorbierenden Faserdämmstoffe sind sowohl native als auch synthetische Fasern und Faserstoffe im Einsatz. Beispiele für den technischen Einsatz nativer Faserstoffe in porösen Schallabsorbern sind Hanf-, Flachs-, Schilf-, Kokos-, Baumwolle-, Stroh-, und Holz- oder Cellulosefasern sowie Schafswolle. Einen Überblick über die nativen Rohstoffe zur Herstellung schallabsorbierender Faserdämmstoffe und ihre Eigenschaften erhält man z. B. in "Dämmstoffe aus der heimischen Natur", CMS Deutschland (Hrsg.) 1997. Daneben werden solche Faserdämmstoffe auch aus den verschiedensten synthetischen Fasern und Faserstoffe wie beispielsweise Polyester hergestellt.

### Glas und Mineralstoffmaterialien:

Schallabsorber aus Glas- oder Mineralfasermaterialien sind weit verbreitet. Sie werden großtechnisch aus feinen Faserfilamenten hergestellt, die zu Platten oder vergleichsweise weichen Matten verarbeitet werden. Ihre Rohdichten liegen zwischen 40 kg/m³ und 250 kg/m³. Zur Erhöhung der Standfestigkeit werden den Faser-Produkten bei der Herstellung im Faserlegungsprozess häufig geringe Mengen Bindemittel beigefügt. Glas- und Mineralfaserplatten finden häufig Einsatz in Akustikdecken. Wegen ihres überwiegend oder vollständig anorganischen Aufbaus erfüllen sie die Baustoffklassen A 1 bzw. A 2 gemäß DIN 4102. Die zur Herstellung von Glas- und Mineralfaserplatten eingesetzten Bindemittel zählen häufig zu den Phenolharzen, deren ökologisches und physiologisches Gefährdungspotential nicht unerheblich ist.

Das in DE 101 181364 beschriebene Verfahren zur Herstellung von Formkörpern aus einem Netzwerk mineralischer Fasern zeigt Möglichkeiten auf, Glas- oder Mineralfaserplatten ohne ein solches Bindemittel durch Einsatz von Natriumsilikatlösungen bei anschließendem Sintern zu erhalten.

### Faserfreie poröse Schallabsorber:

### Disperse Festkörper:

Unter der Materialvielfalt faserfreier poröser Schallabsorber stellen Dispersionen von Festkörpern in der Gasphase eine große und weit verbreitete Systemgruppe dar. Sie besitzen im einfachsten Fall zunächst Koagulationsstruktur und lassen sich durch Schüttungen von Stoffpartikeln erzeugen. Dabei können die Festkörperbestandteile bereits in porosierter Form vorliegen. Beispiele hierfür sind Blähton, Perlite, expandierte Schichtmineralien wie Vermiculite, mineralischer Split, Glasschaum, Holz, Kork, Cellulose oder Kunststoffe. Diese werden z.B. als lose Schüttdämmungen in Zwischenwandbereichen, wie sie im Hochbau praktisch zur Anwendung kommen, eingesetzt. Viele der genannten Materialien lassen sich in Schüttungen unter Druck mit Hilfe eines entsprechenden Bindemittels verkleben. Mineralisch anorganische Stoffpartikel können zudem durch Sintern miteinander fixiert werden. Nachfolgend sind neuere Beispiele für disperse Festkörper, die sich als technische Schallabsorber eignen:
DE 10 2005 055 575 A1 beschreibt beispielsweise Schüttungen aus Schotter, Blähton, Beton, Asphalt, Holz oder diversen Kunststoffen bzw. Mischungen hieraus, die mit geeigneten Bindemitteln zu entsprechenden Formteilen gebunden werden können und als schallabsorbierende Bauteile für Fahrbahnen von Schienenfahrzeugen dienen.
DE 197 12 835 C3 beschreibt schallabsorbierende Leichtwerkstoffe. Hierbei werden Blähton-, Perlit- oder Blähglas-Schüttungen mit Natronwasserglas benetzt, getrocknet und anschließend zu Formkörpern mit Rohdichten von 150 - 750 kg/m³ gesintert.
DE 195 39 309 C2 beschreibt einen Schallschutz- bzw. Schalldämmstoff sowie ein Verfahren zu seiner Herstellung, welcher faserhaltig ist und zugleich zu den dispersen Festkörpern zählt. Seine Herstellung erfolgt durch eine bindemittelhaltige Kombination aus Cellulosefaserschüttungen und organischen oder anorganischen Sekundärrohstoffen bzw. Mischungen hieraus.
DE 195 33 564 A1 beschreibt ein schallabsorbierendes Verbundmaterial, welches ebenfalls zur letzteren Werkstoffgruppe gehört. Hierbei werden Aerogelpartikel mit organischen oder anorganischen Faserstoffen kombiniert und mit Wasserglas oder Melaminformaldehydharzen zu flächigen Formkörpern verarbeitet.

### Schäume:

Schaumprodukte sind im Allgemeinen Zweiphasensysteme, wobei eine Phase gasförmig und die andere fest oder flüssig ist. Dabei besteht die gasförmige Phase aus feinen Gasblasen, die entweder eine kugelförmige oder tetraedrische Form besitzt und durch feste oder flüssige Zellstege begrenzt wird. Sie lassen sich deshalb in zwei große Gruppen, die Kugelschäume und die Tetraederschäume einteilen. Die Zellstege sind über Knotenpunkte miteinander verbunden und bilden dabei ein Gerüst.

Schäume mit schallabsorbierenden Eigenschaften sind zumeist offenzellig. Hier sind die dünnen Wände zwischen den Begrenzungsstegen zerstört und die Zellen miteinander verbunden. Dadurch wirkt das Material als poröser Absorber. Die stoffliche Charakteristik der Zellstege in offenzelligen Schäumen ist sehr vielfältig. Sie reicht von Metallen über anorganische Materialien bis hin zu Organopolymeren, die im technischen Einsatz heutzutage den weitaus größten Anteil einnehmen und allgemein als Schaumstoffe bezeichnet werden. Organopolymerschäume werden, abhängig von ihrer Härte in Weich- und Hartschäume eingeteilt. Bei diesen erfolgt die Blasenbildung zumeist über ein Treibgas, welches in situ durch eine chemische Reaktion entsteht oder durch eine chemische Verbindung, die in der organischen Matrix gelöst ist und bei niedrigen Temperaturen siedet oder in gasförmige Produkte zerfällt. Daneben lassen sich Schäume auch durch mechanisches Einmischen von Gasen, durch Polymerisation in Lösung unter Phasentrennung oder durch den Einsatz von Füllstoffen, die nach der Härtung herausgelöst werden, erzeugen.

Einen zahlenmäßig großen Anteil der technisch eingesetzten offenzelligen Organopolymerschäume nehmen dabei diejenigen ein, deren Zellgerüst aus reaktiven Matrices wie PF. MF, oder PUR generiert wird. Letztere sind heutzutage im Alltag und in der Technik unverzichtbar. Sie lassen sich vergleichsweise einfach und schnell als Hart- oder Weichschäume mit den unterschiedlichsten Eigenschaftsprofilen herstellen. Offenzellige PUR-Schäume sind in der Literatur vielfach beschrieben. Einen Überblick bietet G. Oertel, Polyurethane, Becker Braun Kunststoffhandbuch 7, Hanser Verlag München 1983.

Sie werden üblicherweise aus isocayanathaltigen Verbindungen und Polyolen hergestellt. Zur Schaumbildung finden überwiegend Treibgase Verwendung, die durch ihren niederen Siedepunkt physikalisch wirksam sind. Auch gezielte Treibgas-Kombinationen aus physikalisch wirksamen Treibgasen und C0₂, welches durch chemische Reaktion der Isocyanatgruppen mit Wasser beim Verschäumen entsteht, sind gut bekannt. Bei einer Reaktion von Wasser und Isocyanaten entstehen im Gegensatz zur Reaktion mit Polyolen neben CO₂ Harnstoffgruppen, die zur Bildung des Zellgerüstes beitragen. DD 292 467 enthält ein solches Verfahren zur Herstellung von elastischen und offenzelligen Polyurethanweichschaumstoffen, welche in Gegenwart von Wasser und organischen Treibmitteln aus Isocyanaten und Polyetherpolyolen erhalten werden.

Vor dem Hintergrund der Diskussion über die globale Erwärmung werden in jüngerer Zeit vermehrt "wassergetriebene" Polyurethanschaumstoffe entwickelt. Die Schaumbildung erfolgt dabei ohne Hilfe physikalischer Treibgase ausschließlich durch das Treibgas CO₂, welches durch chemische Reaktion der Isocyanatgruppen mit Wasser entsteht. DE 199 05 089 A1 beschreibt beispielhaft feinzellige wassergetriebene Polyurethanhartschaumstoffe mit einer Offenzelligkeit > 85 %. Dieser wird durch Umsetzung von Polyisocyanaten mit einer als Emulsion vorliegenden Polyolkomponente erhalten.

Die Öffnung der Zellwände wassergetriebener Schäume durch mechanische Nachbehandlung (Walken) bleibt wegen der Verletzungsgefahr des Schaumgerüstes vornehmlich den Weichschäumen vorbehalten. Häufiger werden sogenannte Zellöffner eingesetzt. Diese schwächen die Zellwände, die dann bei der Bildung des Schaums während des Blasenwachstums wegen des ansteigenden Überdrucks in den Zellen an den Schwachstellen zerstört werden. Diese Schwächung kann z.B. durch Feststoffe oder andere grenzflächenaktive Substanzen erzeugt werden. Generiert sich das Zellgerüst aus reaktiven Komponenten, so lassen sich weitere Reaktionspartner hinzusetzen, die in einem frühen Stadium während des Schäumvorgangs mit der Umgebung unlösliche Phasen bilden und dadurch die Zellwände schwächen. Speziell bei Polyurethanschäumen kann die Zellöffnung zudem durch Wasserdampf unterstützt werden, welcher als zusätzliche Gasmenge zur Verfügung steht und bei einer inneren Temperatur von 100 °C wirksam wird. (vgl. J. H. Saunders, Fundamentals of Foam Formation in D. Klempner, K. C. Handbook of Polymeric Foams and Foam Technology, Hanser Verlag München 1991, S. 12). DE 691 31 452 T2 beschreibt einen auf diese Weise herstellbaren energie-absorbierenden Polyurethanschaum.

Das in DE 10 2004 046 172 B4 dargelegte Verfahren zur Herstellung eines offenporigen Polyurethanschaums ohne Hautbildung beschreibt ebenfalls die Nutzung von Wasserdampf zur Unterstützung der Zellöffnung. Große technische Bedeutung hat der Zusatz von Additiven, die grenzflächenaktiv wirken und die Zellwände an ihren dünnen Stellen so schwächen, dass ein Durchgang während des Schäumvorgangs entsteht. Die Vielzahl der Lösungsvorschläge, die hierzu aus der aktuellen Literatur entnommen werden können, lässt erkennen, dass für die gewünschte Wirkung grenzflächenaktiver zellöffnender Additive enge Systemgrenzen bestehen. Schon geringe Änderungen führen zu teilweise gravierenden Störungen des Zellgerüsts. Nachfolgend werden die wichtigsten Literaturstellen aus neuerer Zeit kurz aufgeführt:
So beschreibt DE 43 03 809 C2 offenzellige PUR-Hartschäume aus sogenannten 1-Komponenten Systemen durch Zusatz spezieller flüssiger Polyolefine in Mengen von 0,1 -3,0 Gew.-%.
FR-A-1,461,357 schlägt ebenfalls die Verwendung von Kohlenwasserstoffen zur Zellöffnung vor. US-A-4,826,383 und US-A-4,863,975 beschreibt für vergleichbare Systeme Oxynitratsalze als wirksame Zellöffner. Auch die Verwendung von Siloxanen und Polysiloxan-Polyoxyalkylenblockpolymeren zur Zellöffnung wie in DE-A-39 28 867 sind bekannt.
DE 43 18 120 C5 hingegen enthält ein Verfahren zur Herstellung von offenzelligen PUR-Weichschäumen durch Einsatz spezieller Polyoxypropylen-polyoxyethylenpolyole, die zellöffnende Wirkung besitzen sollen.
DE-A-1 2 48 286; und US-A-4,596,665 beschreiben niedermolekulare Polyglykole oder Polyoxyalkylenoxyde, die offenzellige PUR-Weichschäume ermöglichen sollen. DE 100 09 649 sowie DE 103 36 938 beschreiben offenzellige Polyurethan-Hartschäume, die durch den Einsatz von Polyol-Komponenten aus Veresterungsprodukten von Glyzerin und Rizinusöl bzw. Polyetheralkoholen erhalten werden.

Schallenergie kann aber auch durch Relaxationsvorgänge in der Gerüstsubstanz in andere Energieformen umgewandelt werden. Polymerorganische Schäume, deren Polymergerüst so eingestellt ist, dass im entsprechenden Bereich große Relaxationsvorgänge stattfinden können, besitzen dort signifikante Schallabsorptionseigenschaften. Dabei setzten die auftreffenden Schallwellen das Gerüst in Schwingungen. Durch die dabei stattfindenden Relaxationsvorgänge wird die Schwingungsenergie insbesondere in Wärme umgewandelt (vergl. H. Oberst, Werkstoffe mit extrem hoher innerer Dämpfung in Acustica, 1955, 5. 141 - S. 151). Offenlegungsschrift 28 35 329 enthält z. B. einen Polyurethanschaum für die Anwendung zur Geräuschminderung. Durch geeignete Einstellung der Relaxationsvorgänge wurden hohe Schallabsorptionen im Bereich <300 Hz bei einer Probendicke von 30 mm erzielt, DE 199 24 802 A1 beschreibt ein Verfahren zur "Herstellung von, schalldämpfenden und energieabsorbierenden Polyurethanschäumen" auf der Basis spezieller Polyetherpolyole und modifizierten Polyisocyanaten. Der Verlustfaktor tan δ des Materials beträgt laut Ausführung > 0,3. Der Einsatz viskoelastischer Stoffe zur Schalldämpfung ist auch in Bauteilanwendungen beschrieben. DE 39 42 760 A1 zeigt beispielsweise den Einsatz von Polyvinylbutyral als viskoelastische Schicht in Garagentorblättern. DE 698 20 676 T2 betrifft ein vibrationsdämpfendes Verbundmaterial mit einer innenliegenden viskoleastischen Klebeschicht. DE 692 07 437 T2 beschreibt ein schalldämpfendes Sandwichmaterial und ein Verfahren zu seiner Herstellung. Dabei wird ein schalldämpfender elastomerer PUR-Klebstoff mit einem mechanischen Verlustfaktor von tan δ 0,3 - 0,4 im Frequenzbereich von 200 Hz - 2000 Hz verwendet.

EP 1186 630 B1 schließlich enthält ein organischhybrides Dämpfungsmaterial, das einen Dämpfungsverbesserer enthält, welcher aus einem Gemisch spezieller phenolischer Verbindungen aufgebaut ist.

Da die Polyolkomponente die physikalischen Eigenschaften des gebildeten Zellgerüstes wesentlich mit beeinflusst, ist diese für die meisten Formulierungen unerlässlich.

Rein wassergetriebene Formulierungen auf der Basis isocyanathaltiger Verbindungen ohne weitere organische Reaktionspartner wie Polyole sind deshalb sehr selten. Offenlegungsschrift DE 25 24 191 enthält die Beschreibung eines hochgefüllten Polyharnstoff-Schaumstoffs, der aus Polyisocyanaten, Wasser, Katalysatoren, Stabilisatoren und fein verteilten Füllstoffen herstellbar ist, jedoch keine Offenzelligkeit besitzt.

DE 390908361 beschreibt einen Gipsschaumstoff mit poriger Struktur sowie ein Verfahren zu seiner Herstellung für Schall- und Wärmedämmungen. Dabei wird eine Gips-Wasser-Suspension mit einem MDI-Prepolymeren ohne weitere Reaktionspartner in Anwesenheit eines Netzmittels gemischt und zu Formkörpern verschäumt.

DE 25 241 91 A1 beinhaltet mit der Beschreibung eines Verfahrens zur Herstellung eines halogenfreien und füllstoffhaltigen schwer entflammbaren Polyharnstoff-Schaums die Weiterentwicklung des in DE 390908361 offenbarten Gipsschaumstoffs. Dabei kann die erzielbare Rohdichte des Schaumstoffs erheblich gesenkt werden. Zudem soll durch Zugabe größerer Mengen Ammoniumpolyphosphat eine erhöhte Flammwidrigkeit des Schaums erzielt werden. Es zeigt sich jedoch in der Praxis, dass es schwierig ist, die gemäß DE 25 241 91 A1 hergestellten Schäume in offenzelliger Form zu erhalten. Zur Erzielung der gemäß ihrer Einsatzbestimmung vorgesehenen akustischen Mindesteigenschaften müssen die Schaumkörper, nachträglich mechanisch durch Walken oder Nadeln behandelt werden. Hierdurch lässt sich ein Teil der Schaumzellen öffnen. Gleichzeitig verliert das Schaummaterial durch diesen Arbeitsgang an Steifigkeit. Dies ist für viele Applikationen nachteilig und macht konstruktive Hilfslösungen notwendig. Breitbandigere Absorptionsvermögen lassen sich zudem nur durch Kombination mit Lochplatten erzielen.

In DATABASE WPI Week 198644 Derwent Publications Ltd., London, GB; AN 1986-290551 XP002479363 & SU 1 217 838 A (CONS PRODUCTS RES INST) 15. März 1986 (1986-03-15) ist die Herstellung eines wärmeisolierenden Kartons, der mit Gips gefüllt bzw. beschichtet ist, durch Zugabe von faserförmigen Füllstoffen, Gips und Schäummittel zu einer alkalischen Ligninsulfonat-Eisensulfat-Mischung beschrieben. Das Gemisch wird in eine Form zur Trocknung gegeben, wobei feste Materialien entstehen, die durch Wechselwirkungen des Eisensulfats mit dem Ligninsulfonat, das wiederum den Gips aktiviert, verfestigt werden. Die offenzelligen Poren werden durch das gebildete FeO-Hydrat geschlossen. Die Funktion des Ligninsulfonats ist somit die eines Aktivators für den eingesetzten Gips. Hinweise zu oberflächenaktiven Wirkungen sind dieser sind in keiner Weise zu entnehmen und ergeben sich auch nicht implizit aus dem Textzusammenhang.

Die US 3 894 878 A beschreibt die Herstellung von geschäumten porösen Lignin-Festkörpern zur Karbonisierung. Hierfür werden wässrige Ligninsulfonat-Lösungen in eine Form gegeben und bei Temperaturen von 120 - 210 °C für mehrere Stunden erwärmt. Die Substanz des so erhaltenen Schaumkörpers lässt sich unter Schutzgas zu Kohlenstoffstrukturen, z.B. Graphit, konvertieren. Diese Zellgerüste können zur Isolation eingesetzt werden. Ferner besitzen die derartig hergestellten Produkte eine hohe Wärme- wie auch Druckstabilität. Eine Eignung als Schallabsorber ist nicht beschrieben.

Ausgehend hiervon besteht daher die Aufgabe, ein hochgefülltes mineralorganisches Schaumsystem mit hohen und breitbandigen Schallabsorptionseigenschaften insbesondere auch im Frequenzbereich unter 1000 Hz sowie ein prozesssicheres Herstellungsverfahren hierzu anzugeben. Hierbei soll dessen Zellgerüst und Treibgas zur Schaumbildung aus isocyanathaltigen Materialien durch Reaktion mit Wasser bei Raumtemperatur generiert werden und die Offenzelligkeit ohne Nachbearbeitung erhalten werden.

Die Aufgabe wird in Bezug auf das Schaumsystem durch die Merkmale des Anspruchs 1 und betreffend das Herstellungsverfahren durch die Merkmale des Anspruchs 19 gelöst. Anspruch 28 betrifft die Verwendung des Schaumsystems. Die Unteransprüche zeigen vorteilhafte Weiterbildungen auf.

Erfindungsgemäß wird ein Schall absorbierendes Schaumsystem mit mindestens 50% geöffneten Zellen bereitgestellt, das als Zellgerüst aus Polyharnstoff als Schall absorbierendem geschäumtem Werkstoff gebildet ist, wobei der Werkstoff Ligninsulfonat in chemisch gebundener und/oder in eingemischter Form enthält.

Überraschenderweise wurde nun gefunden, dass spezielle Ligninsulfonate bei Schaumsystemen bestehend aus einer isocyanathaltigen Verbindung und einer wässrigen Komponente eine signifikante zellöffnende Wirkung bei der Schaumbildung besitzen. Der Werkstoff enthält das Ligninsulfonat in chemisch gebundener oder eingemischter Form, bevorzugt in homogen eingemischter Form. Ligninsulfonate sind Salze der Ligninsulfonsäure, die beim Sulfit-Aufschluss von Lignin bei der Herstellung von Cellulose entstehen. Die Ligninsulfonate werden dabei aus der Sulfitablagerung gewonnen. Siehe hierzu Ullmann (4) 16, 255-258, Cellulose, Holz und Lignin. Geeignete Ligninsulfonate können z.B. bei ZW-Chemische-Werke, Zell-Wildhausen GmbH, Hansaallee 156 in 40549 Düsseldorf unter dem Markennamen "Collex" käuflich erworben werden.

Erfindungsgemäß kommen solche Ligninsulfonate zum Einsatz, die Molmassen zwischen 500 und 200.000 [g/mol] besitzen. Der bevorzugte Bereich liegt zwischen 1.000 und 10.000 [g/mol].

Erfindungsgemäß können die angegebenen Ligninsulfonate als Gegenionen Natrium, Kalium, Ammonium, Magnesium oder Calcium besitzen. Bevorzug sind solche Ligninsulfonate mit Magnesium als Gegenion.

Erfindungsgemäß besitzt eine Formulierung zur Herstellung des Erfindungsgegenstands zwischen 0,05 - 15 Masse-% Ligninsulfonat bezogen auf die Gesamtmasse des reaktiven Gemisches. Bevorzugt ist ein Bereich von 1 - 10 Masse-%. Die hochgefüllten mineralorganischen Schaumsysteme besitzen ausgezeichnete Schallabsorptionswerte im Frequenzbereich > 400 Hz.

Bei den erfindungsgemäßen, hochgefüllten mineralorganischen Schaumsystemen handelt es sich um offenzellige Werkstoffe, in denen bevorzugt 60% - 100 % aller Zellen geöffnet sind, besonders bevorzugt 70 % - 100 %.

Erfindungsgemäß besitzen die hochgefüllten mineralorganischen Schaumsysteme Rohdichten im Bereich von 50 - 200 kg/m³, bevorzugt 90 - 120 kg/m³. Sie lassen sich schneiden, sägen, bohren und verkleben.

Die erfindungsgemäßen, hochgefüllten mineralorganischen Schaumsysteme enthalten als Zellgerüst Polyharnstoff, das als Kondensationsprodukt aus Polyisocyanat Prepolymeren und Wasser entsteht, wobei der schallabsorbierende Werkstoff zu 10-60 Masse-%, bevorzugt 20 -35 Masse-% aus dem Zellgerüst besteht.

Erfindungsgemäß sind im Allgemeinen solche Polyisocyanat Prepolymere geeignet, die Carbodiimidgruppen, Allophanatgruppen, Isocyanuratgruppen, Harnstoffgruppen, Urethangruppen oder Biurettgruppen aufweisen. Derartige Polyisocyanat Prepolymere lassen sich aus aliphatischen, cycloaliphatischen, araliphatischen, aromatischen oder heterocyclischen Polyisocyanaten, wie sie z.B. von W. Sievken in J. Liebigs Annalen der Chemie, 562, S. 75 - 136 beschrieben sind, herstellen. Diese werden gemäß dem Stand der Technik durch Umsetzung mit Verbindungen, die gegenüber Isocyanat reaktive Wasserstoffatome besitzen, hergestellt. Beispiele hierfür sind Alkohole, Glykole, höhermolekulare Polyole, Mercaptane, Carbonsäuren, Amine, Harnstoff oder Amide. Derartige Prepolymere besitzen freie reaktive Isocyanatgruppen.

Bevorzugt sind dabei solche Prepolymere, die durch Umsetzung aus Diphenylmethan 4,4'-diisocyanat erhalten werden. Erfindungsgemäß soll der freie Isocyanatgehalt dieser Prepolymere zwischen 12 % und 26 %, bevorzugt zwischen 14 -20 % liegen.

Die einsetzbaren Prepolymere sind zudem **dadurch gekennzeichnet, dass** ihre Viskosität bei Raumtemperatur zwischen 500 mPas und 10000 mPas, bevorzugt 3.000 - 7.000 mPas liegt.

Erfindungsgemäß können zur Beschleunigung der Schaumbildung optional prinzipiell alle aus der PUR-Technik bekannten Katalysatoren eingesetzt worden. Diese sind z.B. tertiäre Amine, wie Dimethylbenzylamin, Dicyclohexylmethylamin, Dimethylcyclohexylamin, N,N,N',N' - Tetramethyldiaminodiethylether, Harnstoffderivate wie Bis-(dimethylaminopropyl)-harnstoff, N-Methyl- bzw. N-Ethylmorpholin, Piperazine, wie z.B. Dimethylpiperazin, 1 -Azabicylo-[2.2.0]octan, Diazabicyclo-[2.2.0]octan, N-Dimethylaminoethylpiperidin, Imidazole, wie z.B. 1,2-Dimethylimidazol, Aminoalkohole, wie z.B. Dimethylaminoethanol, N,N,N',N'-Tris(dialkylaminoalkyl)hexahydrotriazin, 2-(N, N-Dimethylaminoethoxy)ethanol, Di-(4-dimethylaminocyclohexyl)-methan, oder Metallsalze wie z.B. Dibutylzinndilaurat, Zinndiethylhexoat, Zinndioctat, Zinkchlorid, Bleioctoat oder Eisen(II)-chlorid oder Mischungen hieraus.

Eingesetzt werden je nach Zweckmäßigkeit 0,001 - 1,0 Masse-% bezogen auf die isocyanathaltige Komponente.

Erfindungsgemäß kann das Wasser, welches zur Herstellung der wässrigen Komponente und zur Reaktion mit der isocyanathaltigen Komponente benötigt wird, Leitungswasser sein. Dieses kann optional Polysaccharide oder modifizierte Polysaccharide in gelöster Form enthalten, wie z.B. Stärke, Xanthan oder Tragant.

Die Menge beträgt 0,01 - 1 Masse-% bezogen auf die Masse des eingesetzten Wassers.

Erfindungsgemäß beträgt die Menge des eingesetzten Wassers zur Herstellung der wässrigen Komponente 5-35 Masse-%, vorzugsweise 12 - 30 Masse-%, bezogen auf die Gesamtmasse des reaktiven Gemisches zur Herstellung des Erfindungsgegenstands.

Als Füllstoffe können feste inerte anorganische oder organische Füllstoffe dienen. Geeignete anorganische Füllstoffe sind z.B. Tonerde, Kreide, Dolomit, Glaspulver, Porzellanbruch, Kaolin, Sand, Alkalisilikate, Calciumsilikate oder Calciumsulfat-Dihydrat.

Geeignete organische Füllstoffe sind z.B. Holzspäne oder Holzmehl, Stroh, Kork, Polyharnstoff, Polyurethan, Polyethylen, Polypropylen, Polyamid, Polyester, Polycarbonate, Polyisoprene, Gummi, Polyether, Polyarcylnitril.

Erfindungsgemäß werden Füllstoffmengen im Bereich von 20 - 80 Masse-% bevorzugt 30 - 60 Masse-% bezogen auf die Gesamtmasse des reaktiven Gemisches zur Herstellung des Erfindungsgegenstands eingesetzt. Erfindungsgemäß sind die Füllstoffe zudem **dadurch gekennzeichnet, dass** sie einen geeigneten Korngrößenbereich zwischen 20 µm und 1 mm, bevorzugt 100 µm - 500 µm aufweisen.

Erfindungsgemäß können zusätzlich schalldämpfende Stoffe eingesetzt werden, die signifikant zur Schallabsorption <400 Hz beitragen. Dies kann im vorliegenden Erfindungsgegenstand durch Einsatz viskoelastischer Stoffe erzielt werden, die feinteilig in das Zellgerüst eingebaut werden, wo sie durch schallenergetisch erzeugte Gerüstschwingungen mit angeregt werden. Prinzipiell können hierfür alle Stoffe eingesetzt werden, die einen mechanischen Verlustfaktor im vorgesehenen Einsatzbereich aufweisen und die Schallenergie durch Relaxationsvorgänge dissipieren.

Erfindungsgemäß sind dies Stoffe, die einen Verlustfaktor tan ö > 0,3 bei Raumtemperatur aufweisen. Diese Stoffe werden als pulverförmige Füllstoffpartikel oder faserförmig vor dem Schäumvorgang fein verteilt in der Isocyanatkomponente vorgelegt. Erfindungsgemäß können die viskoelastischen Partikel ausgewählt sein aus der Gruppe der Polyurethane, Polyacrylate, Polyester, Polyisoprene, Polyamide, Polyolefine, Polyether, Polyacetale, Polyketale, Polyphenole, Polyketone, Polyalkohole, Polyharnstoffe sowie ihrer Derivate, Copolymerisate etc. und Mischungen hieraus. Sie können natürlichen und synthetischen Ursprungs sein. Erfindungsgemäß liegt die Korngröße der pulverförmigen Füllstoffe zwischen 5 µm - 1 mm, die Länge der faserförmigen Füllstoffe beträgt 1 mm - 10 mm.

Erfindungsgemäß werden der reaktiven Mischung zur Herstellung des Erfindungsgegenstands Zellstabilisatoren zugegeben. Geeignete derartige Stabilisatoren umfassen Polysiloxanpolymere mit Polyethergruppen.

Zur Erhöhung der Steifigkeit können den Formulierungen des erfindungsgemäßen Schallabsorptionsmaterials Faserstoffe zugegeben werden. Dabei lassen sich prinzipiell alle bekannten Natur- und Kunstfasern verwenden. Bevorzugt sind Fasern auf der Basis von Polyamid, Polyester, Hanf, Flachs und Kokos. Der Bereich Faserlänge 0,1 - 100 mm, bevorzugt 2 - 16 mm. Fasern können bei der Herstellung sowohl der wässrigen Komponente, als auch in Isocyanatkomponente zugegeben werden. Die Fasermengen betragen 0,5 - 20 %, bevorzugt 1 - 10 % bezogen auf die Gesamtmasse des reaktiven Gemisches zur Herstellung des Erfindungsgegenstands.

Die Erhöhung der Flammwidrigkeit der erfindungsgemäßen mineralorganischen porösen Schäume kann durch Zusatz entsprechender Flammschutzmittel erfolgen. Dabei können prinzipiell alle Flammschutzmittel eingesetzt werden, die aus der Polyurethanschaum-Technik bekannt sind.

Bevorzugt werden solche Flammschutzmittel, die bei thermischer Belastung Wasser frei setzen. Zu diesen Stoffen gehören Gips als Dihydrat oder Aluminiumhydroxyd, quellbare Schichtmineralien wie Vermiculite, oder Montmorrilonite. Bevorzugt ist Aluminiumhydroxyd.

Erfindungsgemäß beträgt die Menge 5 - 35 Masse-%, bevorzugt 15 - 30 Masse-% bezogen auf die Gesamtmasse des reaktiven Gemisches zur Herstellung des Erfindungsgegenstands.

Zur weiteren Verbesserung der Flammwidrigkeit können die erfindungsgemäßen organomineralischen hochgefüllten porösen Schäume direkt nach ihrer Herstellung mit einer wasserglashaltigen-Lösung besprüht werden. Hierbei bleibt der offenzellige Zellanteil des Materials erhalten. Der Auftrag kann mit einer handelsüblichen Sprühvorrichtung, wie z.B. einer Farbsprühpistole erfolgen. Wassergläser sind glasig erstarrte Schmelzen von Alkalisilikaten, welche in Wasser löslich sind. Sie werden durch ihre Molverhältnisse von Kieselsäure zu Alkalisilikat sowie durch ihre Dichte charakterisiert.

Erfindungsgemäß können prinzipiell alle auf dem Markt befindlichen Wasserglas-Lösungen, Li-, K- oder Na-Wasserglaslösungen eingesetzt werden. Bevorzugt sind K-Wassergläser mit einem Si0₂/K₂0 Verhältnis zwischen 1,0 - 3,5, bevorzugt 2,5 - 3,0.

Erfindungsgemäß liegt der Feststoffgehalt der Wasserglaslösung zwischen 10 - 40 %, bevorzugt 15 - 20 %. Die aufgetragene Menge der Wasserglaslösung beträgt 0,5 - 10 %, bevorzugt 3 - 7 % Alkalisilikat-Festkörper in der Wasserglaslösung bezogen auf die Masse des Schaums.

Durch diese Maßnahme lässt sich verfahrenssicher die Baustoffklasse gemäß DIN 4102 B1 erzielen.

Die Erfindung betrifft weiterhin ein Verfahren zur Herstellung des Schaumsystems.

Gemäß der vorliegenden Erfindung wird der hochgefüllte organomineralische poröse Schaum aus einer isocyanathaltigen Komponente, nachfolgend als Komponente 1 bezeichnet und einer wässrigen Komponente, nachfolgend als Komponente 2 bezeichnet, hergestellt.

Das ausgewählte Polyisocyanat Prepolymer wird, gegebenenfalls zusammen mit einem Zellstabilisator, einem viskoelastischen pulverförmigen Polymer, Fasern und Katalysatoren zu Komponente 1 gemischt.

Füllstoffe und Zellöffner und gegebenenfalls Flammschutzmittel und Fasern werden zusammen mit Wasser zur Komponente 2 gemischt, welche als Suspension vorliegt, wobei in das zugeführte Wasser gegebenenfalls 0,01-1 % Dextrin in gelöster Form enthält.

Nach innigem Mischen der beiden Komponenten wird die erhaltene Reaktionsmischung in Blockformen eingefüllt und in welchem anschließend die Schäumung unter Bildung von Kohlendioxyd erfolgt. Der ausgehärtete hochgefüllte mineralorganische Schaum liegt als Block vor und lässt sich nach der Aushärtung zu entsprechenden Formteilen wie z.B. Platten verarbeiten, die dann unter Wärmezufuhr bis zu einer gewünschten Restfeuchte getrocknet werden. Der erfindungsgemäße Werkstoff besitzt eine hohe Porosität, ausgezeichnete Schallabsorptionseigenschaften und lässt sich in seinen mechanischen Eigenschaften in einem weiten Bereich variieren, wie an nachfolgenden Beispielen näher erläutert wird.

### Beispiele

### Beispiel 1

### Komponente 1:

Man legt 620 g Wasser vor, in welchem 0,15 % Dextrin gelöst ist. Nach Zugabe von 60 g pulverförmigem Magnesium-Ligninsulfonat rührt man das Gemisch, bis sich der Feststoff weitgehend gelöst hat. Danach gibt man 800 g Calciumsulfonat-Dihydrat (mittlere Korngröße d₅₀ = 200 µm) sowie 460 g Aluminiumhydroxyd (mittlere Korngröße d₅₀ = 50 µm) hinzu und mischt innig.

### Komponente 2:

Man legt 600 g eines Polyisocyanat Prepolymeren auf der Basis von Diphenylmethan-4,4'-diisocyanat mit 16 % freien Isocyanatgruppen und einer Viskosität von 5.500 mPas vor und fügt 10 g polyethermodifizierten Polysiloxans zur Zellstabilisierung hinzu und homogenisiert das Gemisch.

Anschließend werden beide Komponenten miteinander gemischt und in eine offene Form bei Raumtemperatur gegeben. Die Liegezeit des Gemisches beträgt dabei ca. 10 Minuten. Die innere Temperatur der schaumbildenden Masse steigt dabei von 20 °C auf 42 °C. Die maximale Schaumhöhe wird nach ca. 30 Minuten erreicht.

Man erhält ein homogenes hochgefülltes Schaumprodukt mit einer Trockenrohdichte von 100 g/l, das sich problemlos zu Platten sägen lässt. Die Eigenschaften sind in Tabelle 1 dargelegt.

### Tabelle 1

**Tabelle 1: Wesentliche Eigenschaften des Schaumprodukts zu Beispiel 1.**

| Eigenschaft | Einheit | Wert | Vergleich Steinwolle |
|---|---|---|---|
| Rohdichte | [kg/m³] | 100 | 90 |
| Strömungswiderstand in Anlehnung an DIN 29053 | [Pas/m³] | 14.100 | 20.000 |
| Schallabsorption α (Dicke 50 mm) in Anlehnung an DIN 52215/ISO 10534 (Kundt'sches Rohr) | | 0,38/ 250 Hz | 0,30/ 250 Hz |
| | | 0,82/ 500 Hz | 0,65/ 500 Hz |
| | | 0,82/1600 Hz | 0,95/1600 Hz |
| | | 0,85/2000 Hz | 0,95/2000 Hz |
| | | 0,93/4000 Hz | 0,95/4000 Hz |

Wie aus Tabelle 1 hervorgeht, zeigt der erfindungsgemäße Werkstoff gegenüber Steinwolle im Frequenzbereich < 1000 Hz eine deutlich höhere Schallabsorption von 0,82 im Vergleich zu 0,65 bei 500 Hz. Für die Einordnung der Platte im Baustoffbereich ist dabei gerade die Schallabsorption im Frequenzbereich < 1000 Hz ein wesentliches Kennzeichen. Für Bereiche > 1000 Hz erfolgt eine asymtotische Annäherung an den Maximalwert 1 sowohl für die erfindungsgemäßen Platten wie für Steinwolle. Die Einordnung der Platte erfolgt nach EN ISO 11654 "Schallabsorption für die Anwendung in Gebäuden". Hierbei wird aus der frequenzbezogenen Schallabsorption eine Einzahl gebildet, wobei alle Frequenzbereiche gleich stark gewichtet werden. Für poröse Absorber ist gerade der Frequenzbereich kleiner 1000 Hz von entscheidender Bedeutung.

### Beispiel 2:

Man stellt ein Schaumprodukt gemäß Beispiel 1 her. Nach der Entformung wird der erhaltene Block in Platten gesägt und diese mit einer 15 %igen Kaliwasserglaslösung mit einem K₂O/SiO₂-Verhältnis von 2,5 besprüht. Die aufgetragene Menge betrug 1,2 kg Wasserglaslösung/m² Schaumfläche. Die benetzten Platten wurden anschließend bei 70 °C getrocknet und einer Brandprüfung gemäß DIN 4102 unterzogen. Die Platten erzielten problemlos die Baustoffklasse B1. Die Eigenschaften sind in Tabelle 2 dargelegt.

### Tabelle 2

**Tabelle 2: Wesentliche Eigenschaften des Schaumprodukts zu Beispiel 2**

| Eigenschaft | Einheit | Wert | Vergleich Steinwolle |
|---|---|---|---|
| Rohdichte | [kg/m³] | 115 | 90 |
| Strömungswiderstand in Anlehnung an DIN 29053 | [Pas/m³] | 14.000 | 20.000 |
| Schallabsorption α (Dicke 50 mm) in Anlehnung an DIN 52215/ISO 10534 (Kundt'sches Rohr) | | 0,38/ 250 Hz | 0,30/ 250 Hz |
| | | 0,82/ 500 Hz | 0,65/ 500 Hz |
| | | 0,83/1000 Hz | 0,90/1000 Hz |
| | | 0,85/2000 Hz | 0,95/2000 Hz |
| | | 0,93/4000 Hz | 0,95/4000 Hz |
| Baustoffklasse DIN 4102 | | B 1 | A 2 |

Auch aus Tabelle 2 sind wieder die überlegenen Eigenschaften des Werkstoffs in Bezug auf die Schallabsorption bei Frequenzen < 1000 Hz zu entnehmen.

### Beispiel 3:

### Komponente 1:

Man legt 620 g Wasser vor, in welchem 0,15 % Xanthan gelöst sind. Nach Zugabe von 60 g pulverförmigem Magnesium-Ligninsulfonat rührt man das Gemisch, bis sich der Feststoff weitgehend gelöst hat. Danach gibt man 800 g Calciumsulfat-Diyhdrat (mittlere Korngröße d₅₀ = 200 µm) sowie 460 g Aluminiumhydroxyd (mittlere Korngröße d₅₀ = 50 µm) hinzu und mischt innig.

### Komponente 2:

Man legt 600 g eines Polyisocyanat Prepolymeren auf der Basis von Diphenylmehan-4,4'-diisocyanat mit 16 % freien Isocyanatgruppen und einer Viskosität von 5.500 mPas vor und fügt 10 g Polyethermodifizierten Polysiloxans zur Zellstabilisierung und 120 g Polyamidkurzschnittfasern (Pa 6,6, 22 dtex/50 µm, Schnittlänge 6 mm) hinzu und homogenisiert das Gemisch.

Anschließend werden beide Komponenten miteinander gemischt und in eine offene Form bei Raumtemperatur gegeben. Die Liegezeit des Gemisches beträgt dabei ca. 10 Minuten. Die innere Temperatur der schaumbildenden Masse steigt dabei von 20 °C auf 42 °C. Die maximale Schaumhöhe wird nach ca. 30 Minuten erreicht.

Man erhält ein homogenes hochgefülltes Schaumprodukt mit einer Trockenrohdichte von 105 g/l und einer hohen Steifigkeit, das sich problemlos zu Platten sägen lässt. Die Eigenschaften sind in Tabelle 3 dargelegt.

### Tabelle 3

**Tabelle 3: Wesentliche Eigenschaften des Schaumprodukts zu Beispiel 3**

| Eigenschaft | Einheit | Wert | Vergleich Steinwolle |
|---|---|---|---|
| Rohdichte | [kg/m³] | 105 | 90 |
| Strömungswiderstand in Anlehnung an DIN 29053 | [Pas/m³] | 16.000 | 20.000 |
| Schallabsorption α (Dicke 50 mm) in Anlehnung an DIN 52215/ISO 10534 (Kundt'sches Rohr) | | 0,45/ 250 Hz | 0,30/ 250 Hz |
| | | 0,85/ 500 Hz | 0,65/ 500 Hz |
| | | 0,75/1000 Hz | 0,90/1000 Hz |
| | | 0,85/2000 Hz | 0,95/2000 Hz |
| | | 0,85/4000 Hz | 0,95/4000 Hz |

Die Eigenschaften der Platten nach Beispiel 3 weisen nun eine um 50 % höhere Schallabsorption (0,45) im Vergleich zu Steinwolle (0,30) bei 250 Hz auf.

### Beispiel 4:

### Komponente 1:

Man legt 520 g Wasser vor, in welchem 0,15 % Tragant gelöst sind. Nach Zugabe von 140 g flüssigem Magnesium-Ligninsulfonat mit einem Festkörpergehalt von 60 % rührt man das Gemisch. Danach gibt man 1000 g Glasbruch (mittlere Korngröße d₅₀ = 40 µm) hinzu und mischt innig.

### Komponente 2:

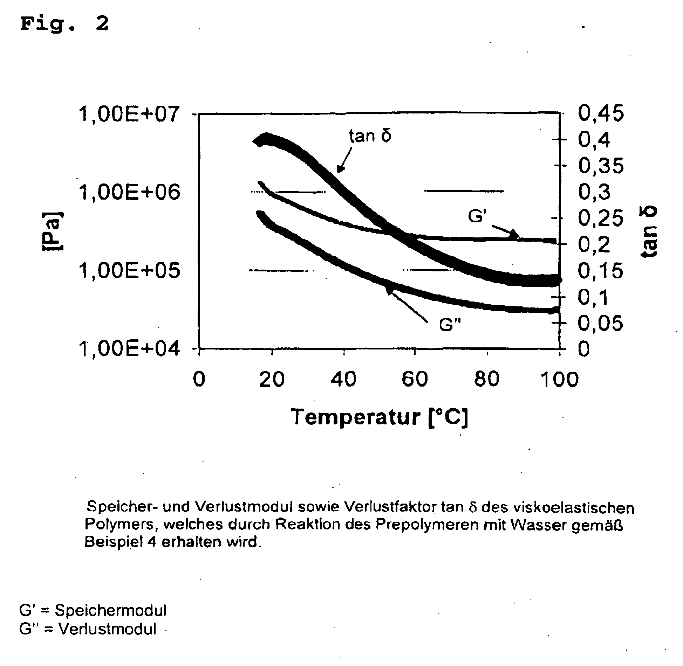

Man stellt zunächst ein prepolymeres Polyisocyanat aus monomerem MDI und Hydroxytriglyzeriden mit einer OH-Zahl von 65 her. Der freie Isocyanatgehalt dieses Prepolymers beträgt 16 %. Das erhaltene Prepolymer wird anschließend durch Reaktion mit Wasser zu einem schaumartigen Polymer umgesetzt. Der mechanische Verlustfaktor tan ö des Produkts besitzt bei Raumtemperatur einen Wert in Höhe von ca. 0,4 (vgl. Figur 2). Das erhaltene Material wird anschließend zerkleinert, auf eine mittlere Korngröße d₉₀ von 500 µm heruntergemahlen, getrocknet und im weiteren als viskoelastisches Füllmaterial eingesetzt.

Anschließend legt man 600 g eines Polyisocyanats Prepolymeren auf der Basis von Diphenylmethan-4,4'-diisocyanat mit 16 % freien Isocyanatgruppen und einer Viskosität von 5.500 mPas vor und fügt 10 g polyethermodifizierten Polysiloxans zur Zellstabilisierung und 150 g des zuvor hergestellten viskoelastischen Füllstoffs hinzu und homogenisiert das Gemisch.

Beide Komponenten werden nun miteinander gemischt und in eine offene Form bei Raumtemperatur gegeben. Die Liegezeit des Gemischs beträgt dabei ca. 10 Minuten. Dabei steigt die innere Temperatur der schaumbildenden Masse von 20 °C auf 42 °C. Die maximale Schaumhöhe wird nach ca. 30 Minuten erreicht. Man erhält ein homogenes hochgefülltes Schaumprodukt mit einer Trockenrohdichte von 110 g/l, das sich problemlos zu Platten sägen lässt. Die Eigenschaften sind in Tabelle 4 dargelegt.

### Tabelle 4

**Tabelle 4: Wesentliche Eigenschaften des Schaumprodukts zu Beispiel 4**

| Eigenschaft | Einheit | Wert | Vergleich Steinwolle |
|---|---|---|---|
| Rohdichte | [kg/m³] | 110 | 90 |
| Strömungswiderstand in Anlehnung an DIN 29053 | [Pas/m³] | 25.000 | 20.000 |
| Schallabsorption α (Dicke 50 mm) in Anlehnung an DIN 52215/ISO 10534 (Kundt'sches Rohr) | | 0,52/ 250 Hz | 0,30/ 250 Hz |
| | | 0,76/ 500 Hz | 0,65/ 500 Hz |
| | | 0,80/1000 Hz | 0,90/1000 Hz |
| | | 0,83/2000 Hz | 0,95/2000 Hz |
| | | 0,92/4000 Hz | 0,95/4000 Hz |

Tabelle 4 zeigt wieder die überlegenen Eigenschaften der erfindungsgemäßen Platten in niedrigen Frequenzbereich.

### Beispiel 5:

### Komponente 1:

Man legt 520 g Wasser vor, in welchem 0,15 % Xanthan gelöst sind. Nach Zugabe von 140 g flüssigem Magnesium-Ligninsulfonat mit einem Festkörpergehalt von 60 % rührt man das Gemisch. Danach gibt man 1200 g Kaolin (mittlere Korngröße d₅₀ = 20 µm) hinzu und mischt innig.

### Komponente 2:

Man stellt zunächst ein prepolymeres Polyisocyanat aus polymerem MDI mit einem freien Isocyanatgehalt von 24 % und Hydroxytriglyzeriden mit einer OH-Zahl von 60 her, so dass der freie Isocyanatgehalt dieses Prepolymers 20 % und seine Viskosität ca. 12.000 mPas beträgt.

Anschließend legt man 600 g des Polyisocyanat Prepolymeren vor und fügt 10 g polyethermodifizierten Polysiloxans zur Zellstabilisierung und homogenisiert das Gemisch.

Beide Komponenten werden nun miteinander gemischt und in eine offene Form bei 40 °C gegeben. Die Liegezeit des Gemisches beträgt dabei ca. 10 Minuten. Die innere Temperatur der schaumbildenden Masse steigt dabei von 40 °C auf 61 °C. Die maximale Schaumhöhe wird nach ca. 30 Minuten erreicht.

Man erhält ein homogenes hochgefülltes Schaumprodukt mit einer Trockenrohdichte von 95 g/l, das sich problemlos zu Platten sägen lässt. Die Eigenschaften sind in Tabelle 5 dargelegt.

### Tabelle 5

**Tabelle 5: Wesentliche Eigenschaften des Schaumprodukts zu Beispiel 5**

| Eigenschaft | Einheit | Wert | Vergleich Steinwolle |
|---|---|---|---|
| Rohdichte | [kg/m³] | 95 | 90 |
| Strömungswiderstand in Anlehnung an DIN 29053 | [Pas/m³] | 16.000 | 20.000 |
| Schallabsorption α (Dicke 50 mm) in Anlehnung an DIN 52215/ISO 10534 (Kundt'sches Rohr) | | 0,45/ 250 Hz | 0,30/ 250 Hz |
| | | 0,73/ 500 Hz | 0,65/ 500 Hz |
| | | 0,97/1000 Hz | 0,90/1000 Hz |
| | | 0,82/2000 Hz | 0,95/2000 Hz |
| | | 0,92/4000 Hz | 0,95/4000 Hz |

Auch die nach Beispiel 5 gefertigten Platten besitzen überlegene Eigenschaften für die Schallabsorption im wichtigen Bereich < 1000 Hz.

## Patentansprüche

1. Schall absorbierendes Schaumsystem mit mindestens 50% geöffneten Zellen, das als Zellgerüst aus Polyharnstoff als Schall absorbierender geschäumter Werkstoff gebildet ist, **dadurch gekennzeichnet, dass** der Werkstoff Ligninsulfonat in chemisch gebundener und/oder in eingemischter Form enthält.

2. Schaumsystem nach Anspruch 1, **dadurch gekennzeichnet, dass** der Ligninsulfonatgehalt bezogen auf das Gesamtgewicht des Werkstoffs zwischen 0,05 und 15 Gew.-%, bevorzugt zwischen 1 und 10 Gew.-% beträgt.

3. Schaumsystem nach einem der vorhergehenden Ansprüche, **dadurch gekennzeichnet, dass** das Ligninsulfonat Gegenionen ausgewählt aus der Gruppe bestehend aus Natrium, Kalium, Ammonium, Magnesium und/oder Calcium aufweist.

4. Schaumsystem nach einem der vorhergehenden Ansprüche, **dadurch gekennzeichnet, dass** die gewichtsgemittelte molare Masse M_{w} des mindestens einen Ligninsulfonats zwischen 500 und 200.000 g/mol, bevorzugt zwischen 1.000 und 10.000 g/mol liegt.

5. Schaumsystem nach einem der vorhergehenden Ansprüche, **dadurch gekennzeichnet, dass** bevorzugt 60 bis 100 %, besonders bevorzugt 70 bis 100 % aller Zellen geöffnet sind.

6. Schaumsystem nach einem der vorhergehenden Ansprüche, **gekennzeichnet durch** eine Dichte zwischen 50 und 200 kg/m³, bevorzugt 90 bis 120 kg/m³ bei Normalklima (23 °C/50 % rel. Luftfeuchte) und Ausgleichsfeuchte.

7. Schaumsystem nach einem der vorhergehenden Ansprüche, **dadurch gekennzeichnet, dass** der Schall absorbierende Werkstoff Polyharnstoff in einer Menge von 10 bis 60 Gew.-%, bevorzugt von 20 bis 35 Gew.-% enthält.

8. Schaumsystem nach vorhergehendem Anspruch, **dadurch gekennzeichnet, dass** der Polyharnstoff durch Polykondensation mindestens eines Polyisocyanat-Präpolymers in Gegenwart von Wasser herstellbar ist.

9. Schaumsystem nach vorhergehendem Anspruch, **dadurch gekennzeichnet, dass** das Polyisocyanat-Präpolymer ausgewählt ist aus der Gruppe bestehend aus Carbodiimidgruppen-, Allophanatgruppen-, Isocyanuratgruppen-, Harnstoffgruppen-, Urethangruppen-, Biurettgruppen-haltigen Polyisocyanat-Präpolymeren und/oder Polyisocyanat-Präpolymeren ohne weitere funktionelle Gruppierungen.

10. Schaumsystem nach einem der Ansprüche 8 bis 9, **dadurch gekennzeichnet, dass** das das Polyisocyanat-Präpolymer einen freien Isocyanatgruppengehalt von 12 bis 26 Gew.-%, bevorzugt von 14 bis 20 Gew.-% aufweist.

11. Schaumsystem nach einem der Ansprüche 8 bis 10, **dadurch gekennzeichnet, dass** die Viskosität gemessen nach DIN 53015 des Polyisocyanat-Präpolymers bei Raumtemperatur zwischen 500 und 20.000 mPas, bevorzugt zwischen 3.000 und 7.000 mPas liegt.

12. Schaumsystem nach einem der Ansprüche 8 bis 11, **dadurch gekennzeichnet, dass** das Polyisocyanat-Präpolymer erhältlich ist durch Umsetzung mindestens eines Di- und/oder Polyisocyanats mit mindestens einem mindestens bifunktionellen Nucleophil.

13. Schaumsystem nach vorhergehendem Anspruch, **dadurch gekennzeichnet, dass** das mindestens eine Nucleophil ausgewählt ist aus der Gruppe bestehend aus Diolen, Glykolen, Polyolen, Dimercaptanen, Dicarbonsäuren, Diaminen, Triaminen, Polyaminen, Harnstoffen, Amiden und/oder deren Mischungen.

14. Schaumsystem nach Anspruch 12, **dadurch gekennzeichnet, dass** das Diisocyanat MDI (Diphenylmethan-4,4'-diisocyanat) ist.

15. Schaumsystem nach einem der vorhergehenden Ansprüche, **dadurch gekennzeichnet, dass** der Werkstoff mindestens ein inertes anorganisches und/oder organisches Additiv enthält, bevorzugt in einer Menge von 0,5 bis 80 Gew.-%, weiter bevorzugt von 20 bis 80 Gew.-%, besonders bevorzugt von 30 bis 65 Gew.-% bezogen auf die Gesamtmenge des Werkstoffs.

16. Schaumsystem nach vorhergehendem Anspruch, **dadurch gekennzeichnet, dass** das Additiv in partikulärer Form, bevorzugt mit einer mittleren Korngröße d₅₀ zwischen 5 µm und 1 mm, weiter bevorzugt zwischen 20 und 750 µm, besonders bevorzugt zwischen 100 und 500 µm; oder in Faserform mit einer Faserlänge zwischen 0,1 und 100 mm, besonders bevorzugt zwischen 1 und 16 mm; vorliegt.

17. Schaumsystem nach einem der Ansprüche 15 oder 16, **dadurch gekennzeichnet, dass** das anorganische Additiv ausgewählt ist aus der Gruppe bestehend aus Tonerde, Kreide, Dolomit, Glaspulver, Glasfasern, steinmineralischen Fasern, Porzellanbruch, Kaolin, Sand, Alkalisilikaten, Wassergläsern, wie z.B. Lithium-, Natrium- und/oder Kalium-Wassergläser, Calciumsilikaten, Calciumsulfat-Dihydrat, Aluminiumoxid, Aluminiumhydroxid, quellbare Schichtmineralien, wie z.B. Vermiculite und/oder Montmorrilonite und das organische Additiv ausgewählt ist aus der Gruppe bestehend aus Holzspänen, Holzmehl, Stroh, Kork, Naturfasern, wie z.B. Flachsfasern, Kokosfasern und/oder Hanffasern, Polysacchariden, wie z.B. Stärke, Dextrin, Xanthan und/oder Tragant, viskoelastischen Stoffen, Polyharnstoffen, Polyurethanen, Polyolefinen, Polyamiden, Polyestern, Polycarbonaten, Polyisoprenen, Gummi, Polyethern, Polyacetalen, Polyketalen, Polyphenolen, Polyketonen, Polyalkoholen, Polyacrylaten, Polyacrylnitrilen, Polysiloxanen, Polysiloxanen mit Polyethergruppen sowie viskoelastische Stoffe und/oder deren Derivate, Mischungen und/oder Copolymerisate.

18. Schaumsystem nach einem der Ansprüche 15 bis 17, **dadurch gekennzeichnet, dass** das organische Additiv bei Raumtemperatur einen mechanischen Verlustfaktor tan δ > 0,3 aufweist.

19. Verfahren zur Herstellung eines Schaumsystems nach einem der vorhergehenden Ansprüche, wobei
a) eine Linginsulfonat-haltige wässrige Komponente mit
b) einer Polyisocyanat-Präpolymer-haltigen Komponente gemischt und die Reaktionsmischung unter Aufschäumen ausgehärtet wird.

20. Verfahren nach vorhergehendem Anspruch, **dadurch gekennzeichnet, dass** der Linginsulfonatgehalt der wässrigen Komponente a) zwischen 0,05 und 30 Gew.-%, bevorzugt zwischen 1 und 20 Gew.-% beträgt.

21. Verfahren nach Anspruch 19 oder 20, **dadurch gekennzeichnet, dass** die wässrige Komponente a) und/oder die Polyisocyanat-Präpolymer-haltige Komponente b) mindestens ein Additiv enthält.

22. Verfahren nach einem der Ansprüche 19 bis 21, **dadurch gekennzeichnet, dass** zur Beschleunigung der Schaumbildung der wässrigen Komponente a) und/oder der Polyisocyanat-Präpolymer-haltigen Komponente b) mindestens ein Katalysator, bevorzugt ausgewählt aus der Gruppe bestehend aus tertiären Aminen, wie z.B. Dimethylbenzylamin, Dicyclohexylmethylamin, Dimethylcyclohexylamin, N,N,N',N'-Tetramethyldiaminodiehtylether; Harnstoffderivate, wie z.B. Bis-(dimethylaminopropyl)-harnstoff; N-Alklymorpholine, wie z.B. N-Methyl- oder N-Ethylmorpholin; Piperazine, wie z.B. Dimethylpiperazin; 1-Azabicyclo[2.2.0]-octan; Diazabicyclo[2.2.0]octan; N-Dimethylamino-ethylpiperidin; Imidazole, wie z.B. 1,2-Dimethylimidazol; Aminoalkohole, wie z.B. Dimethylaminoethanol, 2-(N,N-Dimethylaminoethoxy)-ethanol; N,N,N',N'-Tris(dialkylaminoalkyl)hexahydrotriazin; Di-(4-dimethylaminocyclohexyl)-methan; Metallsalze, wie z.B. Dibutylzinndilaurat, Zinndiethylhexoat, Zinndioctat, Zinkchlorid, Bleioctat oder Eisen-(II)-chlorid und/oder Mischungen hieraus, zugesetzt wird.

23. Verfahren nach vorhergehendem Anspruch, **dadurch gekennzeichnet, dass** der Katalysator bezüglich der Polyisocyanat-Präpolymer-haltigen Komponente b) in einem Gewichtsverhältnis von 0,001 bis 1,0 Gew.-% eingesetzt wird.

24. Verfahren nach einem der Ansprüche 19 bis 23, **dadurch gekennzeichnet, dass** zur Schaumbildung der wässrigen Komponente a) und/oder der Polyisocyanat-Präpolymer-haltigen Komponente b) mindestens ein Additiv mit zellstabilisierender Wirkung, bevorzugt Polysiloxancopolymere mit Polyethergruppen zugesetzt werden.

25. Verfahren nach vorhergehendem Anspruch, **dadurch gekennzeichnet, dass** das zellstabilisierende Additiv bezüglich der Polyisocyanat-Präpolymer-haltigen Komponente b) in einem Gewichtsverhältnis von 0,001 bis 5,0 Gew.-% eingesetzt wird.

26. Verfahren nach einem der Ansprüche 19 bis 25, **dadurch gekennzeichnet, dass** die innere Temperatur der schaumbildenden Masse < 100 °C, bevorzugt 20 °C - 60 °C beträgt.

27. Verfahren nach einem der Ansprüche 19 bis 24, **dadurch gekennzeichnet, dass** das Schaumsystem nach Aushärtung mit einer Additiv-haltigen Lösung, bevorzugt mit einer Wasserglaslösung besprüht wird.

28. Verwendung eines Schaumsystems nach einem der Ansprüche 1 bis 17 als Schallabsorptionselement, Raumverkleidung, dekoratives Element, in der Fahrzeugindustrie sowie im Hochbau insbesondere im Zwischenwandbereich von Holzständerwänden.

## Claims

1. Sound-absorbing foam system with at least 50% opened cells which is formed as a cellular skeleton comprising polyurea as sound-absorbing foamed material, **characterised in that** the material contains lignin sulphonate in a chemically bonded and/or mixed-in form.

2. Foam system according to claim 1, **characterised in that** the lignin sulphonate content relative to the total weight of the material is between 0.05 and 15% by weight, preferably between 1 and 10% by weight.

3. Foam system according to one of the preceding claims, **characterised in that** the lignin sulphonate has counterions selected from the group comprising sodium, potassium, ammonium, magnesium and/or calcium.

4. Foam system according to one of the preceding claims, **characterised in that** the weight-averaged molar mass M_{w} of the at least one lignin sulphonate is between 500 and 200,000 g/mol, preferably between 1,000 and 10,000 g/mol.

5. Foam system according to one of the preceding claims, **characterised in that** preferably 60 to 100%, particularly preferred 70 to 100%, of all the cells are opened.

6. Foam system according to one of the preceding claims, **characterised by** a density between 50 and 200 kg/m³, preferably 90 to 120 kg/m³, in a standard atmosphere (23°C/50% relative air humidity) and equalising humidity.

7. Foam system according to one of the preceding claims, **characterised in that** the sound-absorbing material contains polyurea in a quantity of 10 to 60% by weight, preferably of 20 to 35% by weight.

8. Foam system according to the preceding claim, **characterised in that** the polyurea can be produced by polycondensation of at least one polyisocyanate prepolymer in the presence of water.

9. Foam system according to the preceding claim, **characterised in that** the polyisocyanate prepolymer is selected from the group consisting of carbodiimide group-, allophanate group-, isocyanurate group-, urea group-, urethane group-, biuret group-containing polyisocyanate prepolymers and/or polyisocyanate prepolymers without further functional groupings.

10. Foam system according to one of the claims 8 to 9, **characterised in that** the polyisocyanate prepolymer has a free isocyanate group content of 12 to 26% by weight, preferably of 14 to 20% by weight.

11. Foam system according to one of the claims 8 to 10, **characterised in that** the viscosity, measured according to DIN 53015, of the polyisocyanate prepolymer at room temperature is between 500 and 20,000 mPas, preferably between 3,000 and 7,000 mPas.

12. Foam system according to one of the claims 8 to 11, **characterised in that** the polyisocyanate prepolymer can be obtained by conversion of at least one di- and/ or polyisocyanate with at least one at least bifunctional nucleophile.

13. Foam system according to the preceding claim, **characterised in that** the at least one nucleophile is selected from the group comprising diols, glycols, polyols, dimercaptans, dicarboxylic acids, diamines, triamines, polyamines, ureas, amides and/or mixtures thereof.

14. Foam system according to claim 12, **characterised in that** the diisocyanate is MDI (diphenylmethane-4,4'-diisocyanate).

15. Foam system according to one of the preceding claims, **characterised in that** the material contains at least one inert inorganic and/or organic additive, preferably in a quantity of 0.5 to 80% by weight, further preferred of 20 to 80% by weight, particularly preferred of 30 to 65% by weight, relative to the total quantity of the material.

16. Foam system according to the preceding claim, **characterised in that** the additive is present in particulate form, preferably with an average particle size d₅₀ between 5 µm and 1 mm, further preferred between 20 and 750 µm, particularly preferred between 100 and 500 µm; or in fibre form with a fibre length between 0.1 and 100 mm, particularly preferred between 1 and 16 mm.

17. Foam system according to one of the claims 15 or 16, **characterised in that** the inorganic additive is selected from the group consisting of clay, chalk, dolomite, glass powder, glass fibres, stone-mineral fibres, porcelain scraps, kaolin, sand, alkali silicates, water glasses, such as e.g. lithium-, sodium- and and/or potassium water glasses, calcium silicates, calcium sulphate dihydrate, aluminium oxide, aluminium hydroxide, swellable layer minerals, such as e.g. vermiculites and/or montmorillonites and the organic additive is selected from the group consisting of wood chips, sawdust, straw, cork, natural fibres, such as e.g. flax fibres, coconut fibres and/or hemp fibres, polysaccharides, such as e.g. starch, dextrin, xanthan, and/or tragacanth, viscoelastic materials, polyureas, polyurethanes, polyolefins, polyamides, polyesters, polycarbonates, polyisoprenes, rubber, polyethers, polyacetals, polyketals, polyphenols, polyketones, polyalcohols, polyacrylates, polyacrylonitriles, polysiloxanes, polysiloxanes with polyether groups and also viscoelastic materials and/or derivatives, mixtures and/or copolymers thereof.

18. Foam system according to one of the claims 15 to 17, **characterised in that** the organic additive at room temperature has a mechanical loss factor tan δ > 0.3.

19. Method for the production of a foam system according to one of the preceding claims, wherein
a) a lignin sulphonate-containing aqueous component
b) being mixed with a polyisocyanate prepolymer-containing component and the reaction mixture being hardened with foaming.

20. Method according to the preceding claim, **characterised in that** the lignin sulphonate content of the aqueous component a) is between 0.05 and 30% by weight, preferably between 1 and 20% by weight.

21. Method according to claim 19 or 20, **characterised in that** the aqueous component a) and/or the polyisocyanate prepolymer-containing component b) contains at least one additive.

22. Method according to one of the claims 19 to 21, **characterised in that** there is added, in order to accelerate the foam formation of the aqueous component a) and/or the polyisocyanate prepolymer-containing component b), at least one catalyst, preferably selected from the group consisting of tertiary amines, such as e.g. dimethylbenzylamine, dicyclohexylmethylamine, dimethylcyclohexylamine, N,N,N',N'-tetramethyldiaminodiethylether; urea derivatives, such as e.g. bis-(dimethylaminopropyl)-urea; N-alkylmorpholines, such as e.g. N-methyl- or N-ethylmorpholine; piperazines, such as e.g. dimethylpiperazine; 1-azabicyclo[2.2.0] octane; diazabicyclo[2.2.0]octane; N-dimethylaminoethylpiperidine; imidazoles, such as e.g. 1,2-dimethylimidazole; amino alcohols, such as e.g. dimethylaminoethanol, 2-(N,N-dimethylaminoethoxy)-ethanol; N,N,N',N'-tris(dialkylaminoalkyl)hexahydrotriazine; di-(4-dimethylaminocyclohexyl)-methane; metallic salts, such as e.g. dibutyltin dilaurate, tin diethylhexoate, tin dioctate, zinc chloride, lead octate or iron-(II)-chloride and/or mixtures hereof.

23. Method according to the preceding claim, **characterised in that** the catalyst is used, with respect to the polyisocyanate prepolymer-containing component b), in a weight ratio of 0.001 to 1.0% by weight.

24. Method according to one of the claims 19 to 23, **characterised in that** there are added for foam formation of the aqueous component a) and/or of the polyisocyanate prepolymer-containing component b), at least one additive with cell-stabilising effect, preferably polysiloxane copolymers with polyether groups.

25. Method according to the preceding claim, **characterised in that** the cell-stabilising additive, with respect to the polyisocyanate prepolymer-containing component b) is used in a weight ratio of 0.001 to 5.0% by weight.

26. Method according to one of the claims 19 to 25, **characterised in that** the inner temperature of the foam-forming mass is < 100°C, preferably 20°C - 60°C.

27. Method according to one of the claims 19 to 24, **characterised in that** the foam system is sprayed after hardening with an additive-containing solution, preferably with a water glass solution.

28. Use of a foam system according to one of the claims 1 to 17 as sound-absorption element, room cladding, decorative element, in the car industry and also in structural engineering, in particular in the partition wall region of single-plank walls.

## Revendications

1. Système de mousse d'absorption acoustique avec au moins 50 % d'alvéoles ouvertes, qui se présente sous la forme d'une structure alvéolaire composée de polyurée comme matériau expansé d'absorption acoustique, **caractérisé en ce que** le matériau contient du sulfonate de lignine sous forme chimiquement liée et/ou sous forme incorporée par mélange.

2. Système de mousse selon la revendication 1, **caractérisé en ce que** la teneur en sulfonate de lignine par rapport au poids total du matériau est comprise entre 0,05 et 15 % en poids, de préférence entre 1 et 10 % en poids.

3. Système de mousse selon l'une quelconque des revendications précédentes, **caractérisé en ce que** le sulfonate de lignine présente des contre-ions choisis dans le groupe constitué du sodium, du potassium, de l'ammonium, du magnésium et/ou du calcium.

4. Système de mousse selon l'une quelconque des revendications précédentes, **caractérisé en ce que** la masse molaire moyenne en poids M_{w} du au moins un sulfonate de lignine se situe entre 500 et 200 000 g/mole, de préférence entre 1000 et 10 000 g/mole.

5. Système de mousse selon l'une quelconque des revendications précédentes, **caractérisé en ce que** de préférence 60 à 100 %, et de manière particulièrement préférée 70 à 100 % de toutes les alvéoles sont ouvertes.

6. Système de mousse selon l'une quelconque des revendications précédentes, **caractérisé par** une densité comprise entre 50 et 200 kg/m³, de préférence entre 90 et 120 kg/m³, dans des conditions normales (23 °C/50 % d'humidité relative de l'air) et à l'équilibre hygroscopique.

7. Système de mousse selon l'une quelconque des revendications précédentes, **caractérisé en ce que** le matériau d'absorption acoustique contient de la polyurée en quantité de 10 à 60 % en poids, de préférence de 20 à 35 % en poids.

8. Système de mousse selon la revendication précédente, **caractérisé en ce que** l'on peut fabriquer la polyurée par polycondensation d'au moins un prépolymère de polyisocyanate en présence d'eau.

9. Système de mousse selon la revendication précédente, **caractérisé en ce que** le prépolymère de polyisocyanate est choisi dans le groupe constitué des prépolymères de polyisocyanate contenant des groupements carbodiimide, allophanate, isocyanurate, urée, uréthane, biuret et/ou des prépolymères de polyisocyanate sans autres groupements fonctionnels.

10. Système de mousse selon l'une quelconque des revendications 8 à 9, **caractérisé en ce que** le prépolymère de polyisocyanate présente une teneur en groupements isocyanate libres de 12 à 26 % en poids, de préférence de 14 à 20 % en poids.

11. Système de mousse selon l'une quelconque des revendications 8 à 10, **caractérisé en ce que** la viscosité mesurée selon la nonne DIN 53 015 du prépolymère de polyisocyanate se situe à température ambiante entre 500 et 20 000 mPas, de préférence entre 3000 et 7000 mPas.

12. Système de mousse selon l'une quelconque des revendications 8 à 11, **caractérisé en ce que** l'on peut obtenir le prépolymère de polyisocyanate en faisant réagir au moins un di- et/ou polyisocyanate avec au moins un nucléophile au moins bifonctionnel.

13. Système de mousse selon la revendication précédente, **caractérisé en ce que** le au moins un nucléophile est choisi dans le groupe constitué de diols, de glycols, de polyols, de dimercaptans, d'acides dicarboxyliques, de diamines, de triamines, de polyamines, d'urées, d'amides et/ou de leurs mélanges.

14. Système de mousse selon la revendication 12, **caractérisé en ce que** le diisocyanate est le MDI (diisocyanate - 4,4' de diphénylméthane)

15. Système de mousse selon l'une quelconque des revendications précédentes, **caractérisé en ce que** le matériau contient au moins un additif inorganique et/ou organique inerte, de préférence en quantité de 0,5 à 80 % en poids, mieux encore de 20 à 80 % en poids, bien mieux encore de 30 à 65 % en poids par rapport à la quantité totale du matériau.

16. Système de mousse selon la revendication précédente, **caractérisé en ce que** l'additif est présent sous forme particulaire, de préférence avec une granulométrie moyenne d₅₀ comprise entre 5 µm et 1 mm, mieux encore entre 20 et 750 µm, bien mieux encore entre 100 et 500 µm ; ou sous la forme de fibres d'une longueur comprise entre 0,1 et 100 mm, mieux encore entre 1 et 16 mm.

17. Système de mousse selon l'une quelconque des revendications 15 ou 16, **caractérisé en ce que** l'additif inorganique est choisi dans le groupe constitué de l'alumine, de la craie, de la dolomite, de la poudre de verre, des fibres de verre, des fibres minérales, des bris de porcelaine, du kaolin, du sable, des silicates de métaux alcalins, des verres solubles, tels que des silicates de lithium, de sodium et/ou de potassium, des silicates de calcium, du sulfate de calcium dihydrate, de l'oxyde d'aluminium, de l'hydroxyde d'aluminium, des minéraux stratifiés gonflables, tels que des vermiculites et/ou des montmorillonites, et **en ce que** l'additif organique est choisi dans le groupe constitué des copeaux de bois, de la farine de bois, de la paille, du liège, des fibres naturelles, telles que des fibres de lin, des fibres de coco et/ou des fibres de chanvre, des polysaccharides, tels que l'amidon, la dextrine, le xanthane et/ou le tragacanthe, des substances viscoélastiques, des polyurées, des polyuréthanes, des polyoléfines, des polyamides, des polyesters, des polycarbonates, des polyisoprènes, du caoutchouc, des polyéthers, des polyacétals, des polycétals, des polyphénols, des polycétones, des polyalcools, des polyacrylates, des polyacrylonitriles, des polysiloxanes, des polysiloxanes avec des groupements polyéther, ainsi que des substances viscoélastiques et/ou leurs dérivés, mélanges et/ou copolymères.

18. Système de mousse selon l'une quelconque des revendications 15 à 17, **caractérisé en ce que** l'additif organique présente à température ambiante un facteur de perte mécanique tan δ > 0 , 3 .

19. Procédé de fabrication d'un système de mousse selon l'une quelconque des revendications précédentes, dans lequel
a) on mélange un composant aqueux contenant du sulfonate de lignine
b) à un composant contenant un prépolymère de polyisocyanate et on durcit le mélange réactionnel par formation de mousse.

20. Procédé selon la revendication précédente, **caractérisé en ce que** la teneur en sulfonate de lignine du composant aqueux a) est comprise entre 0,05 et 30 % en poids, de préférence entre 1 et 20 % en poids.

21. Procédé selon la revendication 19 ou 20, **caractérisé en ce que** le composant aqueux a) et/ou le composant b) contenant le prépolymère de polyisocyanate contient au moins un additif.

22. Procédé selon l'une quelconque des revendications 19 à 21, **caractérisé en ce que**, pour accélérer la formation de la mousse, on ajoute au composant aqueux a) et/ou au composant b) contenant le prépolymère de polyisocyanate au moins un catalyseur, de préférence choisi dans le groupe constitué des amines tertiaires, telles que la diméthylbenzylamine, la dicyclohexylméthylamine, la diméthylcyclohexylamine, le N,N,N',N'-tétraméthyldiaminodiéthyléther; des dérivés d'urée, tels que la bis-(diméthylaminopropyl)-urée ; des N-alkylmorpholines, telles que la N-méthyl- ou N-éthylmorpholine ; des pipérazines, telles que la diméthylpipérazine ; du 1-azabicyclo[2.2.0]-octane ; du diazabicyclo[2.2.0]-octane ; de la N-diméthylamino-éthylpipéridine ; des imidazoles, tels que le 1,2-diméthylimidazole ; des aminoalcools, tels que le diméthylaminoéthanol, le 2-(N,N-diméthylaminoéthoxy)éthanol ; de la N,N,N',N'-tris(dialkylaminoalkyl)-hexahydrotriazine ; du di-(4-diméthylaminocyclohexyl)méthane; des sels métalliques, tels que le dilaurate de dibutylétain, le diéthylhexoate d'étain, le dioctoate d'étain, le chlorure de zinc, l'octoate de plomb ou le chlorure de fer (II) et/ou de leurs mélanges.

23. Procédé selon la revendication précédente, **caractérisé en ce que** l'on utilise le catalyseur dans un rapport pondéral de 0,001 à 1,0 % en poids par rapport au composant b) contenant le prépolymère de polyisocyanate.

24. Procédé selon l'une quelconque des revendications 19 à 23, **caractérisé en ce que**, pour la formation de la mousse, on ajoute au composant aqueux a) et/ou au composant b) contenant le prépolymère de polyisocyanate au moins un additif ayant un effet stabilisateur d'alvéoles, de préférence des copolymères de polysiloxane avec des groupements polyéther.

25. Procédé selon la revendication précédente, **caractérisé en ce que** l'on utilise l'additif stabilisateur d'alvéoles dans un rapport pondéral de 0,001 à 5,0 % en poids par rapport au composant b) contenant le prépolymère de polyisocyanate.

26. Procédé selon l'une quelconque des revendications 19 à 25, **caractérisé en ce que** la température interne de la masse génératrice de mousse est < 100 °C, de préférence de 20 °C à 60 °C.

27. Procédé selon l'une quelconque des revendications 19 à 24, **caractérisé en ce qu'** une solution contenant l'additif, de préférence une solution de verre soluble est pulvérisée sur le système alvéolaire après son durcissement.

28. Utilisation d'un système alvéolaire selon l'une quelconque des revendications 1 à 17 comme élément d'absorption acoustique, revêtement mural, élément décoratif, dans l'industrie automobile, ainsi que dans le bâtiment, en particulier dans l'espace entre deux parois de cloisons à madriers.
